# EUROPEAN PATENT APPLICATION

(11) **EP 1 615 375 A1**
(43) Date of publication of application: **11.01.2006**
(21) Application number: 05014808.9
(22) Date of filing: 07.07.2005
(51) Int. Cl.: H04L 12/18, H04L 1/18

(54) **Method and system for assigning a response channel and reporting a reception result in a mobile communication system**

(30) Priority: 07.07.2004 KR 2004052775
(71) Applicant: SAMSUNG ELECTRONICS CO., LTD., Suwon-si, Gyeonggi-do (KR); Korea Advanced Institute of Science and Technology (KAIST), Daejon (KR)
(72) Inventor: Kwon, Tae-Soo, 373-1, Guseong-dong, Yuseong-gu, Daejeon (KR); Do, Mi-Sun, Yeongtong-gu, Suwon-si, Gyeonggi-do (KR); Cho, Dong-Ho, Seocho-gu, Seould (KR); Hwang, Gyung-Ho, Seo-gu, Daejeon (KR); Lee, Ki-Ho, 373-1, Guseong-dong, Yuseong-gu, Daejeon (KR); Choi, Sik, 373-1, Guseong-dong, Yuseong-gu, Daejeon (KR); Lee, Ho-Won, Chungju-si, Chungcheongbuk-do (KR)
(74) Representative: Grünecker, Kinkeldey, Stockmair & Schwanhäusser Anwaltssozietät

(57) **Abstract**

A synchronous retransmission method in a mobile communication system supporting a multicast service wherein one response channel is assigned on a multicast service-by-multicast service basis, and a response signal is transmitted through the response channel only when at least one mobile terminal fails in decoding for a packet transmitted by the multicast service. Accordingly, the response signal is rapidly transferred to the packet transmitted by the multicast service, and overhead from to the response channel can be reduced.

## Description

The present invention relates generally to a retransmission method in a mobile communication system, and more particularly to a response channel assignment method and a reception result reporting method for multicast services.

Data amount and processing speed demanded by users in a mobile communication system are constantly increasing. When data is transmitted at high speed over a wireless channel, a higher Bit Error Rate (BER) is generated under the influence of multi-path fading, Doppler spread, etc. Therefore, a wireless access scheme is required, which is suitable to transmit data at high speed and with a lower BER through a wireless channel. For example, a spread spectrum modulation scheme, which has advantages of low output, low detection probability, etc., is widely used as such a wireless access scheme.

Additionally, a solution to errors caused by multi-path fading, interference between users, noise, etc., includes a Forward Error Correction Code (FEC) scheme in which the probability of error occurrence is lowered by sending surplus information, an Automatic Repeat Request (ARQ) scheme in which, when errors occurs, a receiver requests a transmitter to retransmit an packet where the errors have occurred, and a Hybrid Automatic Retransmission Request (HARQ) scheme, which combines both the schemes.

In the ARQ scheme, a receiver uses an Acknowledgment (ACK)/Negative Acknowledgment (NACK) signal for notifying a transmitter if received packet data is erroneous. For example, if the transmitter receives the ACK signal, it confirms that the receiver successfully received the corresponding packet data. However, if the transmitter receives the NACK signal, which informs the transmitter of failure in receiving the corresponding packet data, the transmitter retransmits the corresponding packet data.

The ARQ scheme is subdivided into a Stop and Wait (SAW) scheme and an n-channel SAW scheme for complementing disadvantages of the SAW scheme. In the SAW ARQ scheme, an ACK signal for packet data previously transmitted must be received before the next packet data is transmitted. This may cause a situation where the next packet data can be transmitted immediately, but still the transmitter must wait for the ACK signal to be received.

In the n-channel SAW scheme, a plurality of packet data can be transmitted in succession even when the ACK signal for the previously transmitted packet data is not received.

The n-channel SAW scheme is further classified into an asynchronous ARQ scheme and a synchronous ARQ scheme. In a system employing the asynchronous ARQ scheme, an ACK/NACK signal corresponding to packet data is transmitted in the form of a message. For example, a structure of an ARQ-ACK message for transmitting an ACK signal for ARQ is shown below in Table 1.

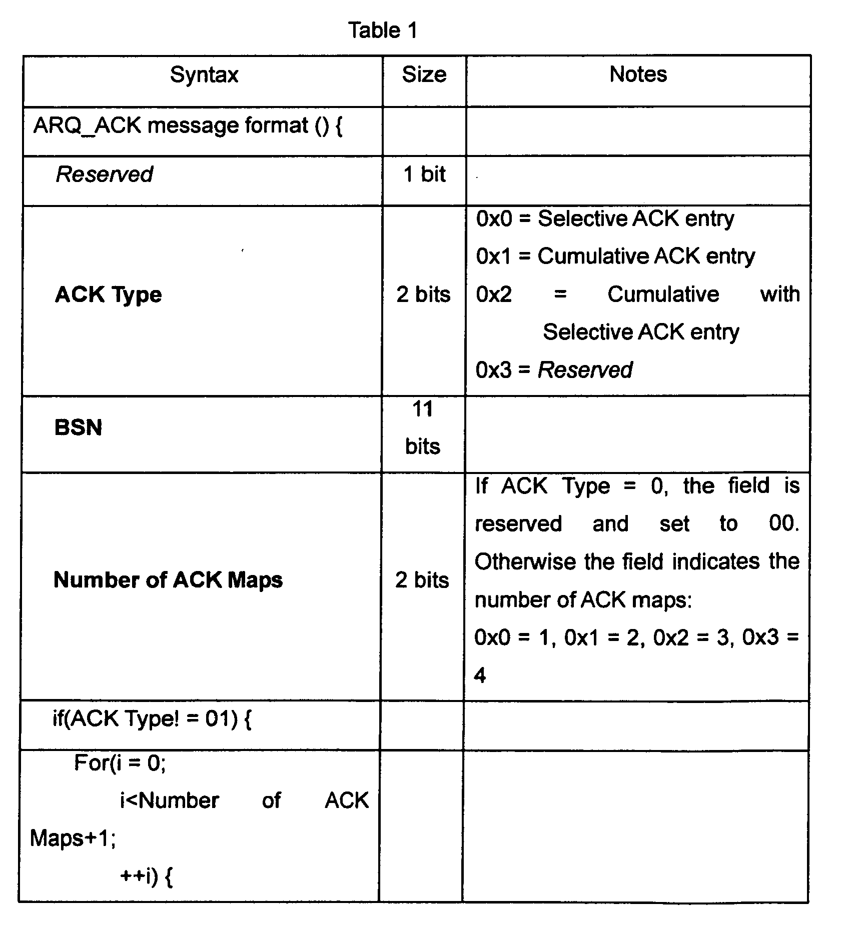

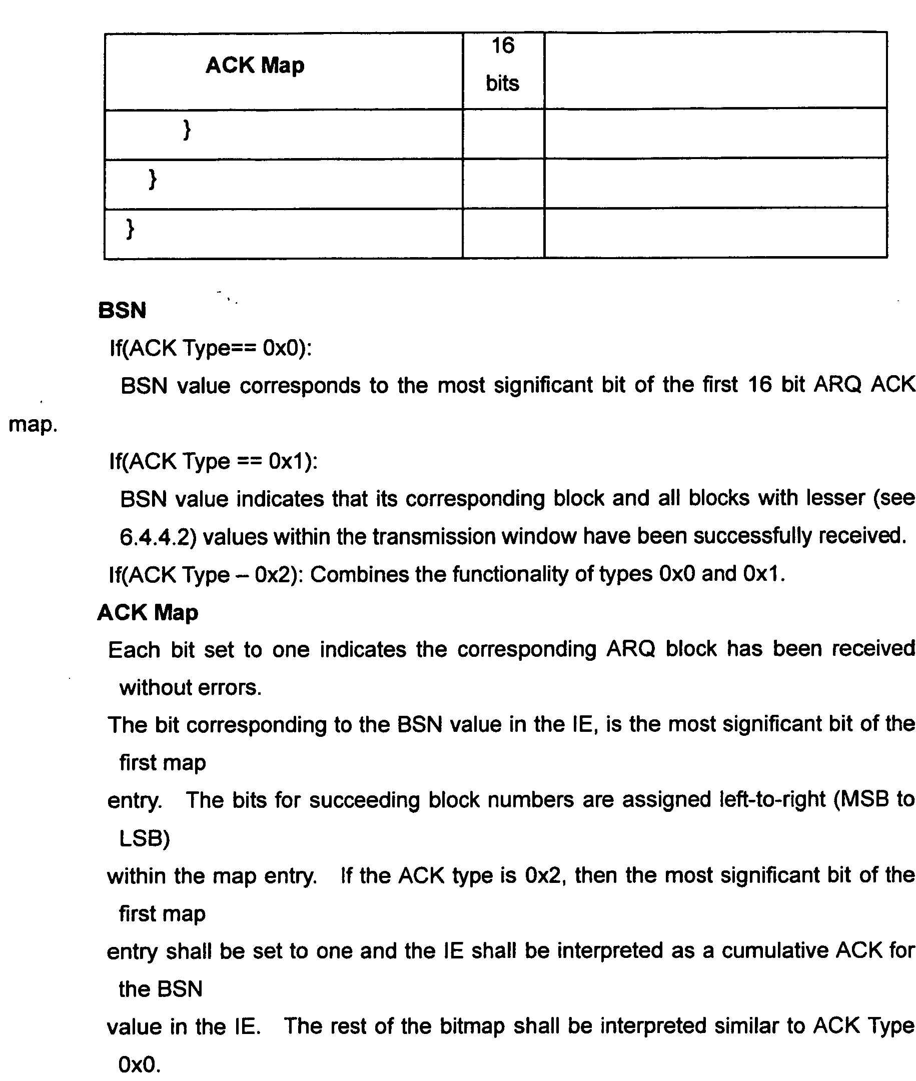

The ARQ-ACK message ranges from a minimum 16 bits to a maximum 80 bits, according to the 'Number of ACK Maps'. Such a type of ACK message is not suitable to real-time data communication and the HARQ scheme. The ACK message is created in the Medium Access Control (MAC) layer of a transmitter, and is converted into a physical signal in a physical layer (PHY layer) of the transmitter and then transmitted. Correspondingly, the ACK message is restored in a PHY layer of a receiver and is processed in a MAC layer of the receiver. Therefore, the ACK message is inevitably accompanied with delay with respect to its creation, encoding, and decoding.

Further, the ACK message is too long for fast and frequent transmission, which creates a serious overhead problem.

A system utilizing the synchronous ARQ scheme transmits the ACK/NACK signal through a response channel assigned correspondingly to a traffic channel over which packet data is transmitted. Accordingly, the synchronous ARQ scheme enables relatively faster transmission of the ACK/NACK signal as compared with the asynchronous ARQ scheme.

In particular, when the ARQ scheme is used in real-time communication, such as Voice over Internet Protocol (VoIP), video phoning, moving picture reception, etc., it is essential to quickly transfer the ACK/NACK signal and reduce overhead. Consequently, for the efficient transmission of data to be transmitted in real time, a fast ARQ scheme like the synchronous ARQ scheme is used.

Because fast retransmission is possible when such a fast ARQ scheme is used, a real-time traffic can be transmitted at least twice. This enables an efficient transmission method having a high modulation scheme and a high code rate because many retransmissions can be performed to satisfy the probability of packet reduction according to a quality of service (QoS) of the packet.

In a next-generation mobile communication system, the necessity of a multicast service as well as that of a unicast service is now being addressed for the pluralization of services. The unicast service commonly refers to a point-to-point service between a base station and a mobile terminal. Therefore, if the synchronous ARQ scheme is applied to a mobile communication system supporting the unicast service, transmission efficiency in real-time data transmission can be increased.

However, the multicast service commonly refers to a service between one base station and plurality of mobile terminals. Therefore, if the synchronous ARQ scheme is applied to a mobile communication system supporting the multicast service, separate response channels must be assigned to the respective mobile terminals.

As described above, in the existing ARQ scheme, the ACK/NACK signal has been reciprocated between physical layers of transmitting and receiving parties in order to provide a reliable multicast service. Therefore, when the existing ARQ scheme is to be applied to a mobile communication system supporting the multicast service, the following points must be taken into consideration.

First, because a base station must receive response signals from at least one mobile terminal belonging to one multicast service group on a terminal-by-terminal basis, it takes a long time to receive the response signals from all the mobile terminals and a time delay is large.

Second, it is difficult to use the fast ARQ in physical layers of transmitting and receiving parties.

Third, as separate response channels must be assigned to the respective mobile terminals on a terminal-by-terminal basis in order to receive individual response signals from all the mobile terminals, a large amount of radio resources must be assigned.

Accordingly, the present invention has been designed to solve the above and other problems occurring in the prior art. The object of the present invention is to provide a method for supporting a fast ARQ scheme in a mobile communication system providing a multicast service.

This object is solved by the subject matter of the independent claims.

Preferred embodiments are defined in the dependent claims.

An aspect of the present invention is to provide an efficient fast ARQ scheme adapted to a multicast service in order to support a reliable multicast service.

A further aspect of the present invention is to provide a method for transmitting a processing result of received packet data through the same response channel by at least one mobile terminal, which is provided with a multicast service.

A yet still further aspect of the present invention is to provide a method for receiving response signals transmitted from a plurality of mobile terminals through one response channel in a mobile communication system.

A yet still further aspect of the present invention is to provide a fast ARQ scheme in which, when at least one mobile terminal to be provided with a multicast service successfully receives packet data, the at least one mobile terminal does not have to transmit a response signal acknowledging the successful reception.

A yet still further aspect of the present invention is to provide a sub-channel assignment method for transmitting a result of processing packet data, which at least one mobile terminal to be provided with a multicast service receives on a terminal-by-terminal basis in a mobile communication system based on an Orthogonal Frequency Division Multiplex Access (OFDMA) scheme.

A yet still further aspect of the present invention is to provide a method for enabling at least one mobile terminal receiving the same multicast service to use the same orthogonal modulation symbols as a NACK signal for packet data in a mobile communication system based on an OFDMA scheme.

A yet still further aspect of the present invention is to provide a method for demodulating a result of processing packet data, which is expressed by the same orthogonal modulation symbols, in a mobile communication system based on an OFDMA scheme.

In order to accomplish this, in accordance with a first aspect of the present invention, there is provided a method for assigning a response channel in a base station of a mobile communication system supporting a multicast service. The method includes the steps of: dividing mobile terminals into multicast groups based on requested multicast services; and assigning a same response channel to a plurality of mobile terminals belonging to a same multicast group.

In accordance with a second aspect of the present invention, there is provided a method for reporting a data processing result in a mobile terminal of a mobile communication system supporting a multicast service. The method includes the steps of: assigning a response channel to the mobile terminal correspondingly to a requested multicast service by a base station; and transmitting a result of processing data, which is received from the base station according to the requested multicast service, to the base station through the response channel, wherein the same response channel is assigned to plural mobile terminals belonging to the same multicast group.

In accordance with a third aspect of the present invention, there is provided a method for reporting a data processing result in a mobile communication system supporting a multicast service. The method includes the steps of: decoding data received correspondingly to a multicast service; and transmitting a predetermined orthogonal modulation symbol row through a response channel assigned correspondingly to a traffic channel through which the data is transmitted, if the decoding for the receives data fails. The response channel and the orthogonal modulation symbol row are shared with at least one mobile terminal, and no signal is transmitted through the response channel, if the decoding for the received data succeeds.

In accordance with a fourth aspect of the present invention, there is provided a method for receiving a data processing result in a mobile communication system supporting a multicast service. The method includes the steps of: transmitting data according to the multicast service; determining if a response signal corresponding to the data according to the multicast service is received through a response channel shared with at least one mobile terminal; and retransmitting the data according to the multicast service if the response signal is received, wherein at least the mobile terminal uses the same response signal.

The present invention will be more apparent from the following detailed description taken in conjunction with the accompanying drawings, in which:
FIG 1 is a view illustrating an example of assigning sub-channels in a conventional OFDMA scheme;
FIG. 2 is a view illustrating relations between downlink and uplink channels in accordance with a preferred embodiment of the present invention on the basis of a time division duplexing scheme;
FIG. 3 is a view illustrating procedures performed by applying fast ARQ in accordance with a preferred embodiment of the present invention in a mobile communication system supporting an OFDMA scheme;
FIG. 4 is a flowchart illustrating a base station operation for transmitting packet data for a multicast service in accordance with a preferred embodiment of the present invention; and
FIG. 5 is a flowchart illustrating a mobile terminal operation for receiving packet data for a multicast service in accordance with a preferred embodiment of the present invention.

Preferred embodiments of the present invention will be described in detail herein below with reference to the accompanying drawings. It should be noted that the similar components are designated by similar reference numerals although they are illustrated in different drawings. Additionally, in the following description of the present invention, a detailed description of known functions and configurations incorporated herein will be omitted when it may obscure the subject matter of the present invention.

The present invention to be described below proposes a method for transmitting and receiving a result of processed data frames by applying a retransmission technique in a mobile communication system supporting an Orthogonal Frequency Division Multiplex Access (OFDMA) scheme by way of example. However, it is apparent to those skilled in the art that embodiments to be described below can be applied to not only the mobile communication system supporting the OFDMA scheme, but also most mobile communication systems, which use orthogonal modulation symbols and to which ARQ is applied.

An Orthogonal Frequency Division Multiplexing (OFDM) scheme is usually suitable to high-speed data transmission in a wired/wireless channel and is vigorously being studied. Because the OFDM scheme uses a plurality of carriers having mutual orthogonality, frequency use efficiency is high. Further, procedures of modulating/demodulating the plurality of carriers produce the same results as those obtained by performing Inverse Discrete Fourier Transform (IDFT) and Discrete Fourier Transform (DFT), and thus can be realized at high speed using Inverse Fast Fourier Transform (IFFT) and Fast Fourier Transform (FFT). Because such an OFDM scheme is suitable to high-speed data transmission, it has been adopted as a standard scheme of Broadband Wireless Access (BWA), Digital Audio Broadcasting (DAB), Digital Terrestrial Television Broadcasting (BTTB), Asymmetric Digital Subscriber Line (ADSL), and Very High Speed Digital Subscriber Line (VDSL).

A frequency domain structure of OFDM symbols according to the OFDM scheme is defined by sub-carriers. The sub-carriers are divided into a data sub-carrier, which is used for data transmission, a pilot sub-carrier, which is used for transmitting a promised pattern of symbols with a view to various estimations, and a null sub-carrier, which corresponds to a DC sub-carrier and a sub-carrier belonging to a guard zone. From among the sub-carriers, the data sub-carrier and the pilot sub-carrier not belonging to the null sub-carrier are collectively called 'effective sub-carriers'.

In the OFDMA scheme, sub-carriers different from each other are assigned to a plurality of users in the above-described OFDM scheme and signals of the plural users are multiplexed with the same symbol to be transmitted. Such an OFDMA scheme is utilized as a multiple access scheme in an OFDMA mode of the BWA standard. The OFDMA scheme uses a plurality of subsets into which a set of sub-carriers is divided and each subset is called 'sub-channel'. By assigning the respective sub-channels to users, an OFDMA-based system can simultaneously provide services to a plurality of users.

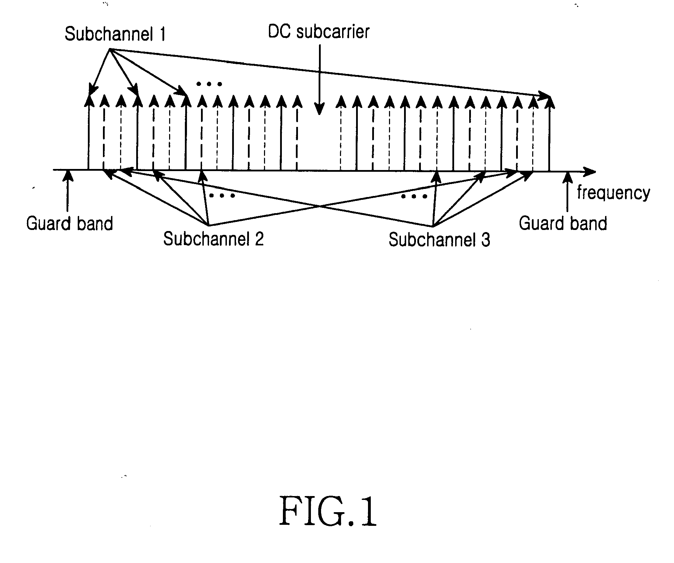

FIG. 1 illustrates an example of a method for assigning sub-channels in the conventional OFDMA scheme.

### A. Outline of Embodiments of the Present Invention

Embodiments of the present invention are intended to propose a method for transmitting a response signal for supporting a fast ARQ technique according to a multicast service in an OFDMA-based mobile communication system.

Usually, the response signal is used to indicate success or failure in decoding for a received packet. That is, an ACK signal is used as the response signal when the received packet is successfully decoded, and a NACK signal is used as the response signal when the received packet fails to be decoded.

In view of characteristics of the response signal, the response signal must be rapidly fed-back and continuously transmitted every frame. Accordingly, on a receiving side, processing time for creating a response signal corresponding to a specific packet must be short. Further, overhead caused by the response signal must be minimized.

Therefore, in the embodiments of the present invention, a separate physical channel for transmitting the response signal will be defined in order to shorten the processing time for creating the response signal in a mobile communication system supporting an OFDMA scheme. Hereinafter, the so-defined physical channel for transmitting the response signal is referred to as a 'response channel'. The response channel must have a channel structure, which is commonly used in the OFDMA-based mobile communication system. Also, because the present invention is premised on a multicast service, the response channel is assigned in the unit of a multicast service. That is, at least one mobile terminal requesting to be provided with the same multicast service transmits the response signal through the same response channel.

Further, in the embodiments of the present invention, a non-coherent detection scheme is applied in order to minimize overhead due to the fast ARQ and the response signal. Additionally, when a received packet is successfully decoded, no response signal is transmitted in order to reduce overhead due to the response signal. That is, the present invention does not use the ACK signal, but uses only the NACK signal as the response signal. As a result, in the embodiments of the present invention, an asynchronous modulation scheme is used as an orthogonal modulation scheme to enable the non-coherent detection. In the orthogonal modulation scheme, a specific orthogonal modulation symbol row is used as the NACK signal. A Walsh code, which is used for classifying channels in a CDMA scheme, may be used as the orthogonal modulation symbol.

As described above, in the present invention, one response channel is assigned to mobile terminals requesting to be provided with the same multicast service. In addition, each mobile terminal transmits an orthogonal modulation symbol row corresponding to a NACK signal through the response channel, only when it fails to decode a received packet. Therefore, if any the mobile terminals fails in the decoding, the orthogonal modulation symbol row corresponding to the NACK signal is transmitted through the response channel. However, if all the mobile terminals succeed in the decoding, no information is transmitted through the response channel.

Consequently, a base station providing the multicast service determines if the corresponding packet is retransmitted by determining if the orthogonal modulation symbol row corresponding to the NACK signal is transmitted through the response channel. That is, the base station retransmits the corresponding packet only when the orthogonal modulation symbol row is transmitted thereto through the response channel.

When a plurality of mobile terminals fail to decode a received packet, each of them transmits the orthogonal modulation symbol row through the response channel. Although the same response channel is shared with the mobile terminals, there is no problem in checking the response channel on the base station side because the same orthogonal modulation symbol rows are transmitted from the mobile terminals. That is, as the same orthogonal modulation symbol rows are transmitted from the mobile terminals through the same response channel, the base station can obtain a diversity gain and plan to improve reception performance.

### B. Example of the Present Invention

Hereinafter, a detailed description will be given for transmitting party operations for transmitting a result of processing received data frames, i.e., a NACK, through an assigned sub-channel using an orthogonal modulation technique and receiving party operations for receiving a result of the processing of orthogonal modulated data frames, i.e., orthogonal modulation symbol row, through the sub-channel.

Also, signaling procedures between the transmitting and receiving parties will be defined. Accordingly, an orthogonal code to be used for orthogonally modulating the result of processing data frames (NACK) and a sub-channel to be assigned for transmitting the result of processing orthogonally modulated data frames (orthogonal modulation symbol row) must be definitely defined.

### B-1. Signaling Procedures

Hereinafter, signaling procedures between transmitting and receiving parties according to a preferred embodiment of the present invention will be described in detail with reference to the accompanying drawings.

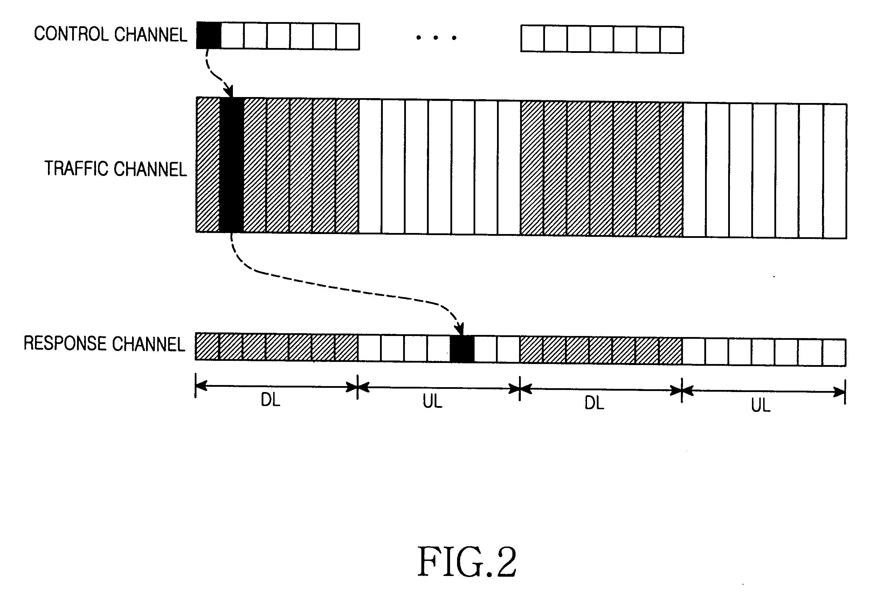

FIG. 2 illustrates relations between downlink and uplink channels in accordance with a preferred embodiment of the present invention on the basis of a time division duplexing scheme. A control channel and a traffic channel exist as the downlink channel and a response channel exists as the uplink channel. Information on the traffic channel and the response channel is transmitted through the control channel. Multicast data according to a multicast service is transmitted through the traffic channel. When decoding of the multicast data fails, an orthogonal modulation symbol row corresponding to the decoding failure is transmitted through the response channel.

Referring to FIG. 2, Uplink (UL)-MAP information and Downlink (DL)-MAP information are transmitted through the control channel from time slot to time slot. The UL-MAP information is a resource for transmitting data over an uplink and includes information notifying a mobile terminal of an OFDM symbol and a sub-channel. The DL-MAP information includes information indicating a downlink location where data is transmitted terminal by terminal. However, as the traffic channel corresponds one-to-one to the response channel in the present invention, the transmission of the UL-MAP information may be omitted.

When providing a multicast service, the UL-MAP information and the DL-MAP information are separately determined according to multicast services. Accordingly, the UL-MAP information and the DL-MAP information are transmitted through the control channel at the location of a time slot separately specified according to the multicast services. Of course, the UL-MAP information and the DL-MAP information may be repeatedly transmitted at the location of a time slot specified on a terminal-by-terminal basis. Otherwise, the UL-MAP information and the DL-MAP information together with an identifier of a mobile terminal, which will receive the information, may be transmitted with an arbitrary cycle.

A MAC address of the mobile terminal may be used as the identifier of the mobile terminal. In such a case, however, the mobile terminal must continually check the control channel in order to receive the UL-MAP information and the DL-MAP information.

The mobile terminal checks at the location of a time slot specified thereto or in all time slots, if requested UL-MAP and DL-MAP information are received. Also, the mobile terminal becomes aware of a traffic segment or a traffic channel, that is, a resource to be used for a multicast service by receiving UL-MAP information and DL-MAP information provided thereto.

A base station transmits multicast data in a downlink time slot of the traffic channel, which is specified by the DL-MAP information. Accordingly, the mobile terminal receives the multicast data, which is transmitted through the downlink time slot of the traffic channel, using DL-MAP information acquired through the control channel. The mobile terminal also demodulates and decodes the received multicast data and transmits a response signal corresponding to a result of the decoding in an uplink time slot of the response channel corresponding to the downlink time slot where the multicast data has been transmitted, provided that the transmission of the response signal is omitted when the decoding is successfully performed.The location of the uplink time slot where the response signal is transmitted may be acquired by UL-MAP information received through the control channel or an uplink time slot at a predetermined location corresponding to the downlink time slot may be selected as the uplink time slot.

As described above, in the present invention, a base station transmits channel information in a predetermined time slot of a control channel and transmits multicast information in a downlink time slot of a traffic channel, which is specified by the channel information. Accordingly, a mobile terminal receives the multicast data, which is transmitted in the downlink time slot of the traffic channel, using the channel information provided through the control channel, and transmits a response signal (NACK signal) in an plink time slot corresponding to the downlink time slot, only when decoding for the multicast data fails.

### B-2. Fast ARQ Execution Procedures

Hereinafter, fast ARQ according to a preferred embodiment of the present invention will be described in detail with reference to the accompanying drawings.

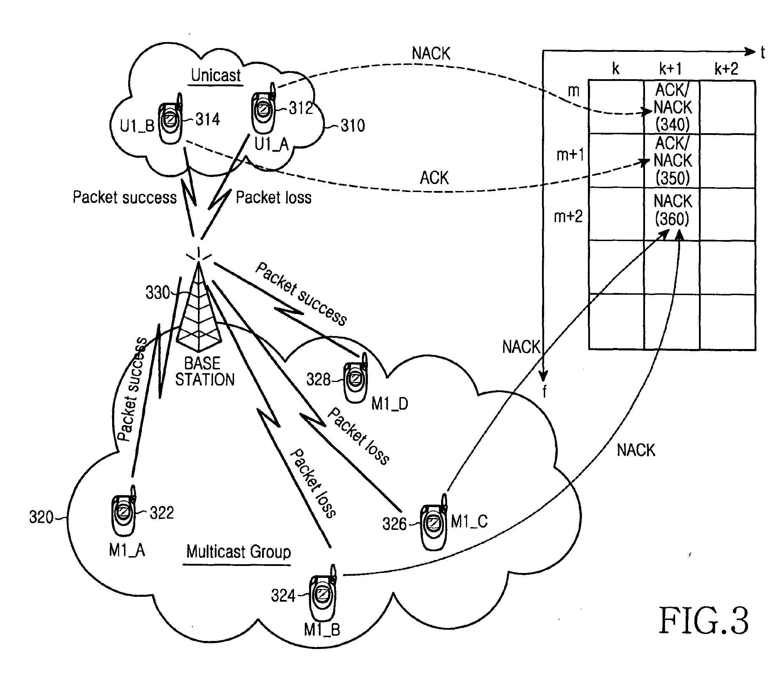

FIG. 3 illustrates procedures of performing fast ARQ in accordance with a preferred embodiment of the present invention in a mobile communication system supporting an OFDMA scheme. In FIG. 3, it is assumed that the mobile communication system based on an OFDMA scheme simultaneously provides a unicast service and a multicast service. Also, a (k+1)-th symbol is used as a response channel for transmitting a response signal. From among sub-channels included in the (k+1) symbol, sub-channels m 340 and (m+1 ) 350 are assigned as response channels to be used by mobile terminals 312 and 314, which are provided with the unicast service. For mobile terminals 322, 324, 326, and 328, which are provided with the multicast service, sub-channel (m+2) 360 of the sub-channels included in the (k+1)-th symbol is assigned as a response channel. The sub-channel is a set of sub-carriers.

Referring to FIG. 3, a base station 330 separately assigns a dedicated traffic channel to each mobile terminal 312 and 314, which belong to a unicast group 310, which requests the unicast service. The base station 330 transmits data according to the unicast service through the dedicated traffic channel.

The mobile terminals 312 and 314 receive the data according to the unicast service through the dedicated traffic channel assigned thereto. Here, it is assumed that the mobile terminal 312 fails to receive the data according to the unicast service and the mobile terminal 314 succeeds in receiving the data according to the unicast service. Therefore, the mobile terminal 312 carries a NACK signal pursuant to the failure in data reception on the response channel 340 assigned thereto and transmits it through the response channel 340. The mobile terminal 314 carries an ACK signal pursuant to the success in data reception on the response channel 350 assigned thereto and transmits it through the response channel 350. Orthogonal modulation symbol rows having mutual orthogonality may be used as the NACK signal and the ACK signal.

As the base station 330 receives the NACK signal through the response channel 340, it retransmits the data according to the unicast service to the mobile terminal 312. However, as the base station 330 receives the ACK signal through the response channel 350, it does not retransmit the data according to the unicast service to the mobile terminal 314.

In addition, the base station 330 assigns traffic channels to the mobile terminals 322, 324, 326, and 328, which belonging to a multicast group 320 that requests the multicast service. A common channel to which a plurality of mobile terminals desiring the same multicast service are simultaneously accessible may be assigned as the traffic channel. In the following description, it is assumed that all the mobile terminals 322, 324, 326, and 328 within the multicast group 320 are provided with the same multicast service. The base station 330 transmits data according to the multicast service through the traffic channel.

The mobile terminals 322, 324, 326, and 328 receive the multicast data through the traffic channel. Here, it is assumed that the mobile terminals 324 and 326 fail in receiving the multicast data and the mobile terminals 322 and 328 successfully receive the multicast data. Therefore, each of the mobile terminals 324 and 326 carries a NACK signal pursuant to the failure in data reception on the response channel 360 assigned correspondingly to the traffic channel and transmits it through the response channel 360. At this time, the NACK signal transmitted from the mobile terminal 324 and the NACK signal transmitted from the mobile terminal 326 are the same orthogonal modulation symbol row. However, the mobile terminals 322 and 328 do not transmit an ACK signal pursuant to the success in data reception. This omission of transmitting an ACK signal is intended to prevent interference between the NACK signals although a plurality of mobile terminals sharing one response channel within the multicast group 320 transmit the NACK signals.

By confirming the existence of the orthogonal modulation symbol row corresponding to the NACK signal in the response channel 360, the base station 330 detects that at least one of the mobile terminals belonging to the multicast group 320 failed to receive the data. The base station 330 that has received the NACK signal then retransmits the multicast data.

### B-3. Concrete Operations of Base Station

Hereinafter, base station operations according to a preferred embodiment of the present invention will be described in detail with reference to the accompanying drawings.

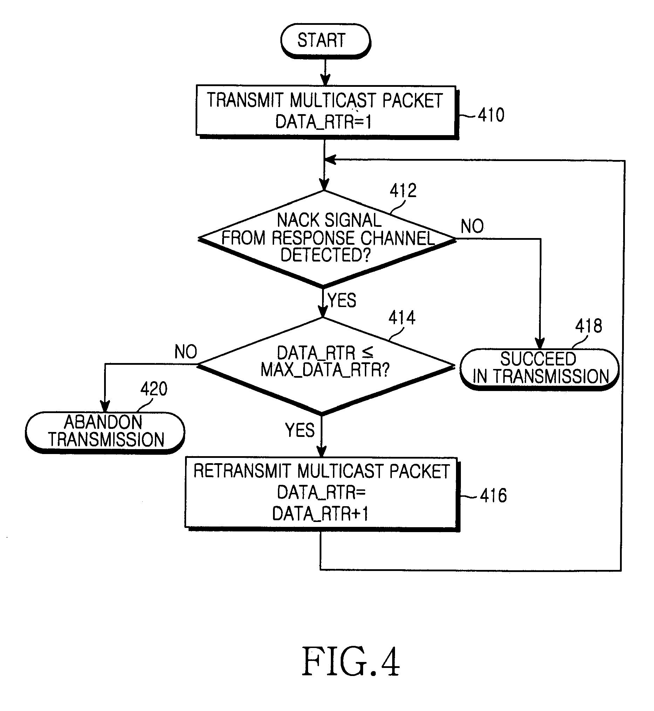

FIG. 4 illustrates a base station operation for transmitting packet data for a multicast service in accordance with a preferred embodiment of the present invention: The operations illustrated in FIG 4 are confined to one multicast service from among one or more multicast services provided by the base station. However, it is obvious that the operations proposed in FIG. 4 are similarly applied to the respective multicast services. Further, the procedures illustrated in FIG. 4 are based on an n-channel SAW ARQ scheme. That is, the base station continuously transmits multicast data without waiting for reception of a response channel and retransmits the corresponding multicast data when a NACK signal is received.

Referring to FIG. 4, if at least one mobile terminal requests a multicast service, the base station transmits DL-MAP information, as information necessary for providing the requested multicast service, to the mobile terminal through a control channel. The control channel uses an MCS level resistant to errors in order to provide reliable transmission. The MCS level is selected such that it is suitable to support QoS of a mobile terminal, which is under the worst channel condition, from among mobile terminals having requested the multicast service. Additionally, the MCS level is selected in consideration of the number of retransmissions possible in supporting fast ARQ.

In step 410, the base station continuously transmits multicast data according to the multicast service. The multicast data is transmitted through a traffic channel assigned correspondingly to the multicast service. A code rate and a modulation scheme to be used for transmitting the multicast data are determined by the MCS level. The base station also sets DATA_RTR for counting the total number of transmissions to 1 multicast service by multicast service.

In step 412, the base station monitors if an orthogonal modulation symbol row corresponding to a NACK signal is received through a response channel (sub-channel assigned for transmitting a NACK signal). That is, the base station determines if an orthogonal modulation symbol row exists in the response channel to be checked, corresponding to the multicast service. Here, the orthogonal modulation symbol row represents the NACK signal, and the orthogonal modulation symbol row may be transmitted through the response channel from at least one mobile terminal that is provided with the multicast service.

When the orthogonal modulation symbol row exists, the base station can determine that at least one mobile terminal has failed to decode the corresponding multicast data. However, if the orthogonal modulation symbol row does not exist, the base station determines that all the mobile terminals have successfully decoded the corresponding multicast data.

When the base station confirms that the orthogonal modulation symbol row exists, it determines if the transmission of the corresponding multicast data has been executed as many times as the maximum allowed number of transmissions (MAX_DATA_RTR) in step 414. This step is performed by comparing DATA_RTR with MAX_DATA_RTR. That is, if DATA_RTR is smaller than MAX_DATA_RTR, the base station determines that the transmission of the corresponding multicast data has not been executed as many times as the maximum allowed number of transmissions (MAX_DATA_RTR). However, if DATA_RTR is equal to or larger than MAX_DATA_RTR, the base station determines that the transmission of the corresponding multicast data has not been executed as many times as the maximum allowed number of transmissions (MAX_DATA_RTR).

When the transmission of the corresponding multicast data has not been executed the maximum allowed number of times (MAX_DATA_RTR), the base station transmits the corresponding multicast data in step 416. The base station also adds 1 to DATA_RTR and then returns to step 412.

However, if the orthogonal modulation symbol row does not exist in step 412, the base station proceeds to step 418 to treat the transmission of the corresponding multicast data as a 'success'. This success treatment includes an operation of deleting the corresponding multicast data temporality stored for retransmission. However, if the base station determines in step 414 that the transmission of the corresponding multicast data has not been executed the maximum allowed number of times (MAX_DATA_RTR), it proceeds to step 420 to abandon the transmission of the corresponding multicast data.

As described above, the base station determines if an orthogonal modulation symbol row is included in a response channel assigned multicast service by multicast service, and retransmits the corresponding multicast data only when the orthogonal modulation symbol row is included the response channel.

In the previous description, the operations at the base station have been explained only with respect to the multicast service because operations related to the unicast service follow the existing procedures. That is, for the unicast service, the base station assigns a specific response channel corresponding to a traffic channel separately assigned to each mobile terminal, and receives a response signal (ACK/NACK signal) to unicast packet data, which has been transmitted over the traffic channel, through the response channel.

### B-4. Concrete Operations of Mobile Terminal

Hereinafter, receiving party operations according to a preferred embodiment of the present invention will be described in detail with reference to the accompanying drawings.

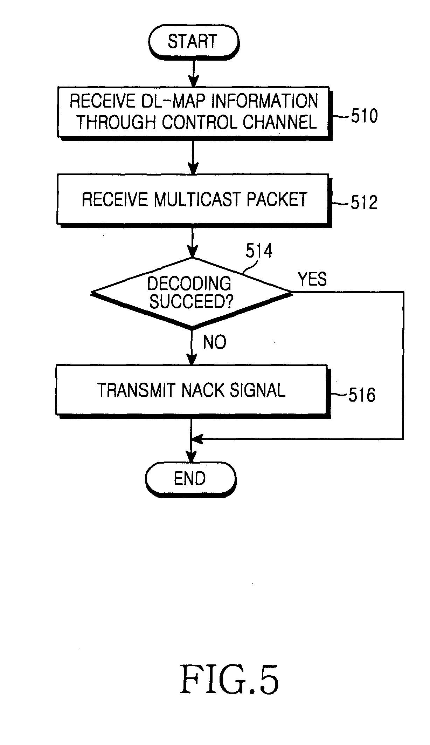

FIG. 5 illustrates mobile terminal operations for receiving packet data for a multicast service in accordance with a preferred embodiment of the present invention. Referring to FIG. 5, in step 510, the mobile terminal requests a desired multicast service to a base station, and receives information necessary for being provided with the multicast service, i.e., DL-MAP information through a control channel. The control channel may be separately specified according to multicast services or mobile terminals. Otherwise, an identifier for identifying a corresponding mobile terminal together with DL-MA information may be transmitted through a control channel. In this case, the corresponding mobile terminal checks an identifier transmitted every time slot of the control channel, and receives corresponding DL-MAP information when the identifier specifies itself.

The mobile terminal confirms a downlink time slot, in which it will receive multicast data, by the DL-MAP information. Thereafter, in step 512, the mobile terminal receives the multicast data transmitted in a predetermined downlink time slot of a traffic channel.

The mobile terminal demodulates and decodes the received multicast data. Information on a code rate and a modulation scheme necessary for the demodulation and the decoding can be confirmed by an MCS level included in the DL-MAP information.

In step 514, the mobile terminal determines if the decoding for the multicast data succeeds. If the decoding for the multicast data succeeds, the mobile terminal does not transmit a response signal for the multicast data. However, if the decoding for the multicast data fails, the mobile terminal proceeds to step 516 to transmit a NACK signal through a response channel. An orthogonal modulation symbol row is used as the NACK signal. The orthogonal modulation symbol row must be commonly used by all mobile terminals to which the same multicast service is provided, and may be defined as '1 -1 -1 1 1 -1' by way of example. The response channel is specified correspondingly to the downlink time slot of the traffic channel where the multicast data is transmitted.

As described above, the mobile terminal transmits an orthogonal modulation symbol row corresponding to a NACK signal through a response channel only when it fails in decoding for received multicast data. Therefore, even if a plurality of mobile terminals do not receive the same multicast data, there will be no interference between NACK signals transmitted from the respective plural mobile terminals. That is, a base station can obtain a synergy effect in receiving the NACK signals.

Additionally, because the mobile terminal transmits no response signal when it successfully decodes the received multicast data, overhead due to the response signal can be reduced. Moreover, the reuse rate of RF resources can be increased.

As described above, according to the present invention, mobile terminals that are provided with a same multicast service use a same response channel, and only a mobile terminal, which does not normally receive data according to the multicast service, transmits a response signal. Accordingly, the present invention has the following effects.

First, mobile terminals transmit a response signal through the same response channel, so that it is possible to efficiently use RF resources.

Second, mobile terminals transmit a response signal through a same response channel, so that a base station can obtain a synergy effect in receiving a response signal.

Third, only a mobile terminal, which does not receive data according to a multicast service, transmits a response signal, thereby reducing overhead due to the response signal.

Finally, as traffic channels can correspond one-to-one to response channels, a base station need not transmit information on a response signal to mobile terminals.

While the present invention has been shown and described with reference to certain preferred embodiments thereof, it will be understood by those skilled in the art that various changes in form and details may be made therein without departing from the scope of the present invention as defined by the appended claims.

## Claims

1. A method for assigning a response channel, through which a mobile terminal reports a data processing result, in a base station of a mobile communication system supporting a multicast service, the method comprising the steps of:
dividing mobile terminals into multicast groups based on requested multicast services; and
assigning a same response channel to a plurality of mobile terminals belonging to a same multicast group.

2. The method as claimed in claim 1, wherein the same response channel corresponds one-to-one to a traffic channel through which data according to a multicast service corresponding to the multicast group is transmitted.

3. The method as claimed in claim 2, wherein a mobile terminal, which fails to receive the data transmitted through the traffic channel, transmits a predetermined response signal through the response channel.

4. The method as claimed in claim 3, wherein the response signal is an orthogonal modulation symbol row.

5. The method as claimed in claim 1, wherein the response channel is at least one of a plurality of sub-channels within an Orthogonal Frequency Division Multiplexing, OFDM, symbol.

6. A method for reporting a data processing result in a mobile terminal of a mobile communication system supporting a multicast service, the method comprising the steps of:
assigning, by a base station, a response channel to the mobile terminal, the response channel corresponding to a requested multicast service; and
transmitting a result of the data processing, which is received from the base station according to the requested multicast service, to the base station through the response channel,
wherein a same response channel is assigned to a plurality of mobile terminals belonging to a same multicast group.

7. The method as claimed in claim 6, wherein the response channel corresponds one-to-one to a traffic channel through which the data is transmitted.

8. The method as claimed in claim 7, wherein the mobile terminal transmits the data processing result to the base station through the response channel, when it fails in processing the received data.

9. The method as claimed in claim 8, wherein the response signal is an orthogonal modulation symbol row.

10. The method as claimed in claim 6, wherein the response channel is at least one of sub-channels within one Orthogonal Frequency Division Multiplexing, OFDM, symbol.

11. A method for reporting a data processing result according to a multicast service by at least one of mobile terminals, which are provided with a same multicast service, in a mobile communication system supporting the multicast service, the method comprising the steps of:
decoding data received corresponding to the multicast service; and
transmitting a predetermined orthogonal modulation symbol row through a response channel assigned corresponding to a traffic channel through which the data is transmitted, if the decoding for the received data fails,
wherein the response channel and the orthogonal modulation symbol row are shared with the mobile terminals, and no signal is transmitted through the response channel, if the decoding for the received data succeeds.

12. The method as claimed in claim 11, wherein the mobile communication system utilizes an Orthogonal Frequency Division Multiplexing, OFDM, scheme.

13. The method as claimed in claim 12, wherein one sub-channel within any OFDM symbol is assigned as the response channel.

14. The method as claimed in claim 11, wherein the response channel is separately assigned according to multicast services.

15. The method as claimed in claim 11, wherein information on the traffic channel is transmitted through a separate control channel.

16. A method for receiving a data processing result from at least one of mobile terminals, which are provided with a same multicast service, to a base station providing the multicast service in a mobile communication system, the method comprising the steps of:
transmitting data according to the multicast service;
determining if a response signal corresponding to the data of the multicast service is received through a response channel shared with the mobile terminals; and
retransmitting the data according to the multicast service, if the response signal is received,
wherein the mobile terminals use a same response signal.

17. The method as claimed in claim 16, wherein the response signal is transmitted from at least one mobile terminal, which fails to receive the data of the multicast service, from among the mobile terminals.

18. The method as claimed in claim 16, wherein the response signal is an orthogonal modulation symbol row.

19. The method as claimed in claim 16, wherein the base station recognizes that the mobile terminals all succeed in receiving the data according to the multicast service, if the response signal is not received.

20. The method as claimed in claim 16, wherein the mobile communication system utilizes an Orthogonal Frequency Division Multiplexing, OFDM, scheme.

21. The method as claimed in claim 21, wherein one sub-channel within any OFDM symbol is assigned as the response channel.

22. The method as claimed in claim 16, wherein the response channel is separately assigned according to multicast services.

23. The method as claimed in claim 16, wherein information on the traffic channel is transmitted through a separate control channel.

24. A mobile communication system comprising a base station and a plurality of mobile stations adapted to perform the method of one of claims 1 to 23.
